# EUROPEAN PATENT SPECIFICATION

(11) **EP 2 270 779 B1**
(45) Date of publication and mention of the grant of the patent: **14.03.2012**
(21) Application number: 10165975.3
(22) Date of filing: 15.06.2010
(51) Int. Cl.: G11B 5/48

(54) **Hard disk drive**
Festplattenlaufwerk
Lecteur de disque dur

(30) Priority: 25.06.2009 KR 20090056957
(43) Date of publication of application: 05.01.2011
(73) Proprietor: Samsung Electronics Co., Ltd., Suwon-si, Gyeonggi-do (KR)
(72) Inventor: Woo, Chul Kim, Gyeonggi-do (KR); Yong, Han Song, Gyeonggi-do (KR)
(74) Representative: Patentanwälte Ruff, Wilhelm, Beier, Dauster & Partner

(56) References cited:
- US-A1- 2004 169 961
- US-B1- 6 867 950

## Description

The invention relates to a hard disk drive. This application claims priority from Korean Patent Application No. 10-2009-0056957, filed on June 25, 2009, the disclosure of which is incorporated herein in its entirety by reference.

Hard disk drives (HDDs) are data storage devices capable of recording data on a disk or reading data stored on the disk by converting a digital electronic pulse including data information into a perpetual magnetic field. The HDD is widely used as an auxiliary memory device for computer systems because of its fast access time to a large amount of data.

The HDD includes a disk to record data, a spindle motor to rotate the disk, a head stack assembly (HSA) having an actuator arm on which a read/write head to write data to the disk or read the data from the disk is mounted, a voice coil motor (VCM) to pivot the actuator arm to move the read/write head to a desired position on the disk, and a base on which the above parts are installed.

The HSA is a carriage to record data on the disk or read the data recorded on the disk and includes the above-described read/write head, an actuator arm pivoting around a pivot shaft across the disk to allow the read/write head to access data on the disk, a pivot shaft holder rotatably supporting the pivot shaft and supporting the actuator arm that is coupled thereto, and a bobbin provided at the opposite side of the actuator arm with respect to the pivot shaft holder. The bobbin is generally manufactured of plastic.

The HSA of the HDD has a variety of resonance modes, among which an in-plane resonance mode mostly affects a tracking operation of the actuator arm. The in-plane resonance mode is generally referred to as a butterfly mode.

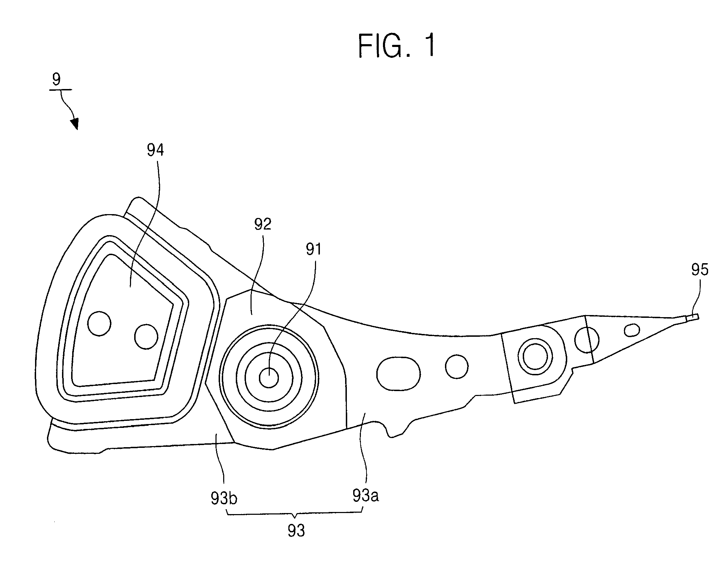

FIG. 1 schematically illustrates the butterfly mode of an HSA 9 of a general HDD. Referring to FIG. 1, in the HSA 9 of the HDD, a portion 93a of an actuator arm 93 provided at one side of a pivot shaft holder 92 and another portion 93b of the actuator arm 93, to which a bobbin 94 is coupled, provided at the other side of the pivot shaft holder 92 are in the shape of being twisted with each other with respect to a pivot shaft 91 as a shaft center, during driving, by the butterfly mode.

The butterfly mode generates track mis-registration (TMR) so that a read/write head 95 may not precisely follow a track. As a result, the performance of the HDD is deteriorated. To reduce the TMR due to the butterfly mode of the HSA 9, a method to increase a servo bandwidth may be considered. In order to increase the servo bandwidth, a butterfly mode frequency has to be increased.

To increase the butterfly mode frequency, the use of a bobbin manufactured of a metal material, for example, aluminum, instead of plastic material may be considered. However, when the bobbin manufactured of a metal material, such as aluminum, is used, it is a problem that mass and moment of inertia of the bobbin are increased. Thus, when a metal bobbin is to be used, the butterfly mode frequency should be increased without an increase in the mass or the mass and the moment of inertia of the bobbin, thereby reducing the TMR.

US 6,867,950 B1 discloses an HDD according to the preamble of claim 1.

It is the technical problem underlying the invention to provide a hard disk drive which is capable of increasing a butterfly mode (BFM) frequency of a head stack assembly by using a specific bobbin design to increase a servo bandwidth so that track mis-registration (TMR) may be reduced.

The invention solves this problem by providing a hard disk drive having the features of claim 1. Advantageous embodiments of the invention are mentioned in the dependent claims.

According to the invention an HDD includes an actuator arm to pivot over a disk around a pivot shaft as a center of rotation to allow a read/write head disposed on one side of the pivot shaft to access data on the disk, a bobbin provided at the opposite side to the read/write head with respect to a pivot shaft holder that rotatably supports the pivot shaft, and a voice coil coupled to the bobbin, in which the bobbin includes a bobbin body coupled to a first end portion of a voice coil adjacent to the pivot shaft holder, and a plurality of bobbin legs extending from an end portion of the bobbin body toward areas of a second end portion of the voice coil on an opposite side of the first end portion of the voice coil, and coupled to the areas of the second end portion of the voice coil.

The plurality of bobbin legs may be a pair of bobbin legs, and the bobbin may substantially have a plane " 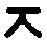 " shape.

The voice coil may substantially have a trapezoidal shape, and the pair of bobbin legs may be extended from the end portion of the bobbin body toward both corners of the second end portion of the voice coil, forming an obtuse angle, and coupled to both corners of the second end portion of the voice coil.

The bobbin body may have a height to correspond to 4/5 to 5/6 of the overall height of the bobbin.

The bobbin body may include a pair of first body units, each having an upper surface provided on the substantially same plane with an upper surface of each of the pair of bobbin legs, and a second body unit having an upper surface at a position lower than an upper surface of each of the pair of first body units.

The pair of first body units may respectively extend from a base portion of each of the pair of bobbin legs, to substantially form an "X" shape with the pair of bobbin legs, and the second body unit may substantially have a trapezoidal shape.

The thicknesses of the first body units and the second body unit may be different from each other, and a width of a portion of the second body unit adjacent to the pivot shaft holder may be smaller than a width of an opposite portion of the second body unit.

A width of a portion of the bobbin body adjacent to the pivot shaft holder may be larger than a width of an opposite portion of the bobbin body, and the plurality of bobbin legs may be a pair of bobbin legs extending from both corner portions of the end portion of the bobbin body and respectively coupled to the areas of the second end portion of the voice coil that are separated from each other.

A width of a portion of the bobbin body adjacent to the pivot shaft holder may be smaller than a width of an opposite portion of the bobbin body, and the plurality of bobbin legs may be a pair of bobbin legs extending from a center portion of the end portion of the bobbin body and respectively coupled to the areas of the second end portion of the voice coil that are separated from each other.

The bobbin may be formed of a metal material. The bobbin may be formed of aluminum or an aluminum alloy.

The plurality of legs may have substantially the same width.

The bobbin body may have a first width and the plurality of legs are separated from each other be a second width larger than the first width.

The two legs may extend from the body to form an acute angle with each other.

The bobbin body and the two legs may substantially form a "Y" shape.

Advantageous embodiments of the invention are described in the following and illustrated in the drawings as is the conventional embodiment explained above to facilitate the understanding of the invention. In the drawings:

FIG. 1 schematically illustrates the butterfly mode of a HSA of a general HDD according to the prior art;

FIG. 2 is an exploded perspective view illustrating major parts of an HDD according to the invention;

FIG. 3 is a perspective view illustrating that the major parts of the HDD of FIG. 2 are assembled;

FIG. 4 is a perspective view illustrating a bobbin of the HDD of FIG. 1 in detail;

FIG. 5 is a perspective view illustrating the shape of the bobbin of FIG. 4 that is changed for convenience of manufacturing;

FIG. 6 schematically illustrates a modeling process to optimize the phase of the bobbin of FIG. 4;

FIGS. 7 to 10 are perspective views schematically illustrating the phase optimization design process of the bobbin of FIG. 6;

FIG. 11 is a perspective view illustrating a bobbin of an HDD according to another embodiment of the invention;

FIG. 12 is a perspective view illustrating the shape of the bobbin of FIG. 11 that is changed for convenience of manufacturing;

FIG. 13 is a perspective view illustrating a bobbin of an HDD according to another embodiment of the invention; and

FIGS. 14 and 15 are perspective views illustrating alternate shapes of a bobbin according to embodiments of the invention.

The drawings illustrate embodiments of the invention and are referred to in order to gain a sufficient understanding of the general inventive concept and the merits thereof. Hereinafter, the invention will be described in detail by explaining embodiments of the invention with reference to the attached drawings. Like reference numerals in the drawings denote like or functionally equivalent elements.

As described herein, terms such as "height" and "width" are relative dimensions to the positioning of components such as a bobbin body or bobbin legs at different points in an angular rotation of a bobbin. For example, in some rotational positions, the "height" of a bobbin body as described herein may be synonymous with a "width" in a different rotational position and a "length" in yet another position. In other positions, the dimension discussed may have a "diagonal" or angled dimension that may not fit into traditional definitional categories. Thus, the provision of certain terms such as "height" and "width" are not meant to limit the orientation of different components in any way, and are merely provided to allow better understanding of the relative dimensions of the elements and features of the present general inventive concept.

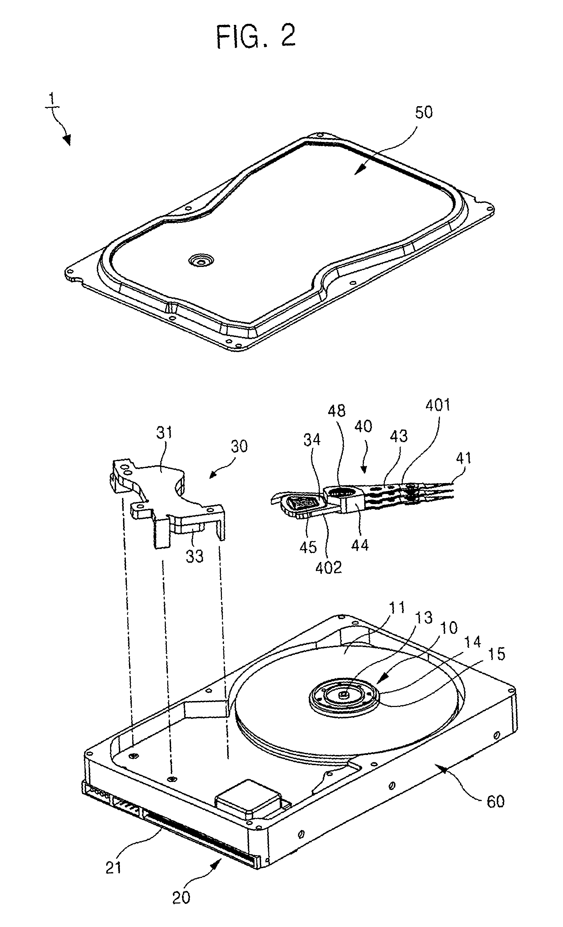

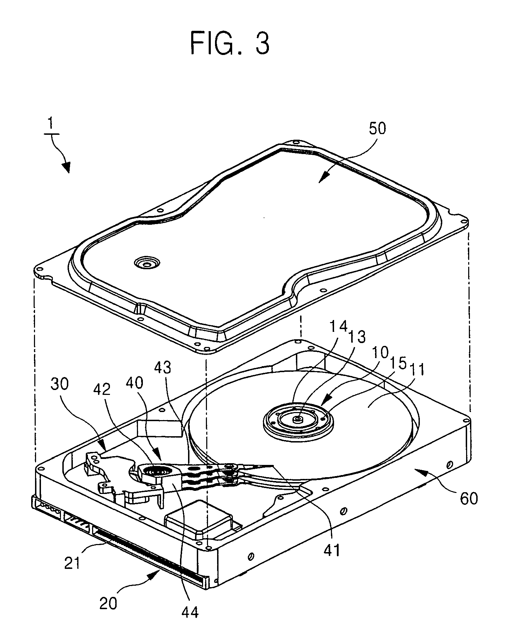

Referring to FIGS. 2 to 5, a HDD 1 according to the invention includes a disk pack 10 having at least one disk 11, a printed circuit board assembly (PCBA) 20, a head stack assembly (HSA) 40 having at least one read/write head 41 mounted on one end portion thereof and a bobbin 45, around which a voice coil 34 is wound, provided at the other end portion thereof. A voice coil motor (VCM) 30 is provided to pivot the HSA 40 about a pivot shaft 48, a cover 50, and a base 60. The above-described constituent elements are installed within the base 60 and the cover 50 is coupled to the base 60 to protect the constituent elements installed within the base 60.

The disk pack 10 includes a plurality of disks 11 arranged in a vertical direction, a shaft 13 to form the rotation center of the disks 11, a spindle motor hub (not illustrated) provided radially outside the shaft 13 and supporting the disks 11, a spindle motor (not illustrated) to rotate the spindle motor hub, a clamp 14 coupled to an upper portion of the spindle motor hub, and a clamp screw 15 pressing the clamp 14 to fix the disks 11 to the spindle motor hub.

The PCBA 20 includes a printed circuit board (PCB, not illustrated) having a plate shape and coupled to a lower portion of the base 60, a flexible printed circuit board (FPCB, not illustrated) installed on an upper surface of the base 60 close to the HSA40 and electrically connecting the HSA 40 and the PCB, and a PCB connector 21 provided at a side of the PCB. A plurality of chips and circuits (not illustrated) to control the disk pack 10, the HSA 40, the VCM 30 and other components disposed within the base 60 may be provided on the PCB to communicate signals to and from one or more external devices via the PCB connector 21.

The HSA 40, as a carriage to record data on at least one disk 11 or read data from at least one disk 11, includes the at least one read/write head 41 to write data to the disk 11 or read the written data, an actuator arm 43 pivoting around a pivot shaft 42 across the disk 11 to allow the read/write head 41 to access data on the disk 11, a pivot shaft holder 44 rotatably supporting the pivot shaft 42 and supporting the actuator arm 43 that is coupled thereto, and the bobbin 45 provided at the opposite side of the actuator arm 43 with respect to the pivot shaft holder 44.

A plurality of read/write heads 41 reads or writes information with respect to the disk 11 that are rotating, respectively, by sensing a magnetic field formed on the surface of the disk 11 or magnetizing the surface of the disk 11. The read/write head 41 to read and write data includes a read head to sense the magnetic field of the disk 11 and a write head to magnetize the disk 11.

The VCM 30 can e.g. be a type of driving motor that rotates the actuator arm 43 of the HSA 40 in a predetermined direction to move the read/write head 41 to a desired position on the one or more disks 11. The VCM 30 includes a VCM yoke 31 having magnets 33 and the voice coil 34 arranged under the VCM yoke 31 and coupled to the bobbin 45.

The VCM 30 operates according to Fleming's left hand rule, that is, when current is applied to a conductive body existing in a magnetic field, an electromagnetic force is generated. As current is applied to the VCM coil 34 located between the magnets 33, a force is generated and applied to the bobbin 45 to rotate the bobbin 45 and the actuator arm 43 positioned on the opposite side of the pivot shaft 48. Accordingly, as the actuator arm 43 is rotated in a predetermined direction, the read/write head 41 mounted at the end portion of the actuator arm 43 moves radially across the disk 11 that is rotating, and simultaneously searches and accesses a desired track (not illustrated). Thus, the data may be recorded on the disk 11 or the recorded data may be read from the disk 11. The VCM yoke 31 to concentrate magnetic flux generated by the magnets 33 in a predetermined direction may be manufactured of pure steel having a high magnetic permeability.

In the HDD 1, during driving of the HSA 40, due to a butterfly mode (BFM) of the HSA 40 including the actuator arm 43, a portion 401 of the actuator arm 43 provided at one side of the pivot shaft holder 44 and another portion 402 of the actuator arm 43 where the bobbin 45 is installed are in the shape of being bent or twisted with each other with respect to the pivot shaft 42. The butterfly mode generates track mis-registration (TMR) which prevents the read/write head 41 from precisely tracking a track on a disk 11. As a result, the performance of the HDD 1 may be deteriorated.

To reduce the TMR, in the present exemplary embodiment, the material and structure of the bobbin 45 is changed and improved to increase a servo bandwidth so that a butterfly mode frequency is increased. That is, to increase the butterfly mode frequency, the bobbin 45 is manufactured of a metal material, such as aluminum and alloys thereof. Additionally or alternatively, the shape of the bobbin 45 is optimized to avoid an increase in the mass and/or the moment of inertia of the bobbin 45 that may be generated as the bobbin 45 manufactured of a metal material is employed, which will described later.

The BFM frequency f of the HSA40 is proportional to an elastic coefficient k, but inversely proportional to a value of mass m. When the bobbin 45 is made of a metal material, the BFM frequency f of the HSA 40 may be higher than that of the bobbin 45 made of a plastic material. Nonetheless, when the plastic material is simply replaced by the metal material, it is a problem that the overall mass and the moment of inertia of the HSA 40 are increased. Thus, an optimal design of the shape of the bobbin 45 is desirable which may increase the BFM frequency f of the HSA 40 without increasing or much increasing the mass or the mass and moment of inertia of the bobbin 45.

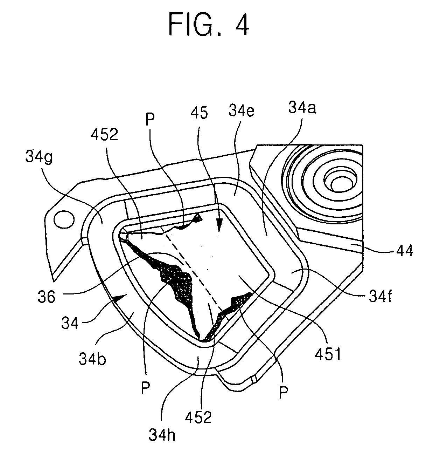

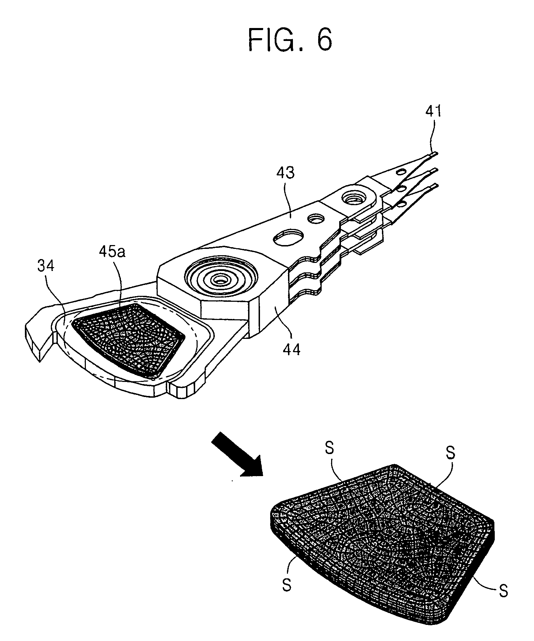

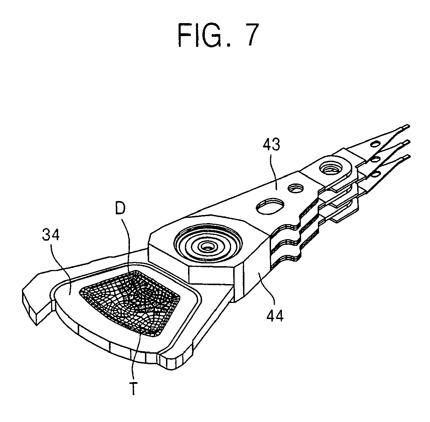

FIG. 6 schematically illustrates a computer modeling process to optimize the phase of the bobbin 45 of FIG. 4. FIGS. 7 to 10 schematically illustrate the phase optimization design process of a bobbin 45a of FIG. 6. Referring to FIG. 6, the bobbin 45a that is an object of modeling for the optimization of the shape of the bobbin 45 may be made of an aluminum material including alloys thereof to have a shape corresponding to the trapezoidal shape of the voice coil 34, and include a plurality of divided unit segments S.

To determine an optimal shape of the bobbin 45, as illustrated in FIGS. 7 to 10, in a state of not considering the moment of inertia of the bobbin 45, a process to maximize a value of the BFM frequency f of the HSA 40 is repeated with respect to the bobbin 45 made of an aluminum material.

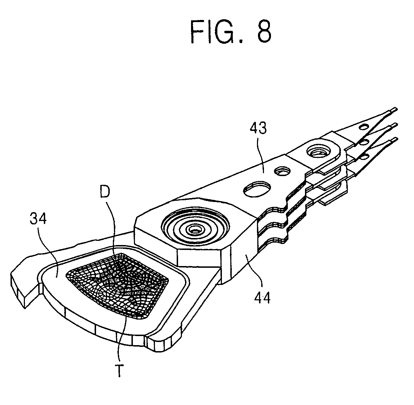

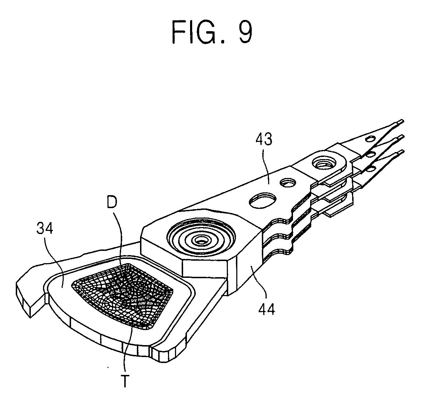

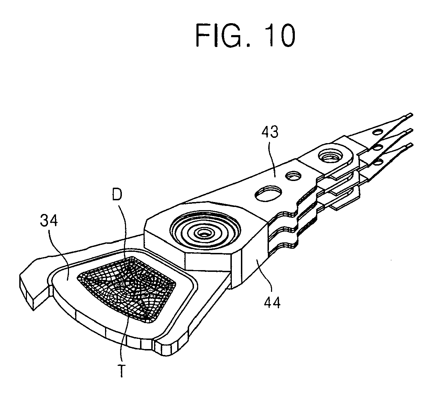

FIG. 7 illustrates the shape of the bobbin 45a when the process to maximize a value of the BFM frequency f of the HSA 40 is performed one time, by forming the unit segments S of the bobbin 45a of an aluminum material. FIG. 8 illustrates the shape of the bobbin 45a when the process is repeated five times. FIG. 9 illustrates the shape of the bobbin 45a when the process is repeated seven times. FIG. 10 illustrates the shape of the bobbin 45a when the process is repeated thirteen times. In FIGS. 7 to 10, a dark area D denotes an aluminum material region, whereas a blurred area T denotes an empty region having no material.

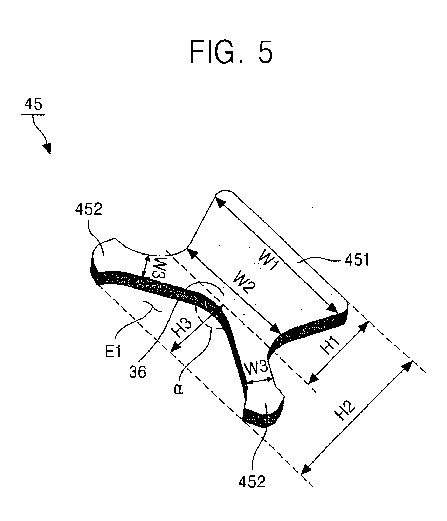

In the same manner as illustrated in FIGS. 7 to 10, the shape of the bobbin 45 that is optimized and obtained by increasing the number of repetitions is as illustrated in FIG. 4. Edges of the bobbin 45 are illustrated as being roughened and jagged because FIG. 4 is a magnified version of an actual metal material bobbin of the present invention. An optimized shape of the bobbin 45, considering manufacturing convenience and costs, is illustrated in FIG. 5.

A plurality of protruding portions P of FIG. 4 may be generated from the shape obtained from a result of phase optimization of the bobbin 45a of FIGS. 7 to 10 (as illustrated in FIG. 6). The protruding portions P may be changed according to the shape and size of the bobbin 45a. Thus, in the following description, an exemplary embodiment will be described based on the shape of the bobbin 45 considering manufacturing convenience, in which the protruding portions P are omitted, as illustrated in FIG. 5. Since this condition is similar to those of other exemplary embodiments, a repeated description thereof will be omitted.

The bobbin 45 of the present exemplary embodiment has a shape obtained by increasing the BFM frequency f of the HSA 40 without considering moment of inertia. The bobbin 45 is provided to substantially have a plane " 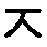 " shape and to be coupled to the voice coil 34.

As illustrated in detail in FIGS. 4 and 5, the bobbin 45 includes a bobbin body 451 coupled to a first end portion 34a of the voice coil 34 adjacent to the pivot shaft holder 44, and a pair of bobbin legs 452 extending from an end portion 36 of the bobbin body 451 toward corner areas 34g and 34h of a second end portion 34b of the voice coil 34 that are separated from each other, and coupled thereto.

That is, the bobbin body 451 may be symbolized by the upper straight portion of the plane " 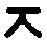 " shape and may be coupled to an inner side of the first end portion 34a and both corner portions 34e and 34f of the first end portion 34a of the voice coil 34 adjacent to the pivot shaft holder 44. The pair of bobbin legs 452 may be symbolized by the lower arc-shaped portions of the plane " 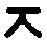 " shape and may respectively extend to both corner portions 34g and 34h of the second end portion 34b of the voice coil 34 from the end portion 36 of the bobbin body 451 and may be coupled to both corner portions 34g and 34h of the second end portion 34b of the voice coil 34. The plane " 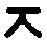 " shape is not limited to a particular orientation, but may be rotated in any position commensurate with the rotation of the bobbin 45 about the pivot shaft 44.

The bobbin body 451 may be coupled to the first end portion 34a of the voice coil 34 adjacent to the pivot shaft holder 44 to improve a stiffness effect on the overall HSA 40 in the BFM of the HSA 40. In the bobbin body 451, the width W1 of a portion adjacent to the pivot shaft holder 44 may be larger than the width W2 towards the center of the bobbin portion thereof.

The pair of bobbin legs 452, each having a width W3, respectively extend from the end portion 36 of the bobbin body 451 towards both corner portions 34g and 34h of the second end portion 34b of the voice coil 34 and are coupled to both corner portions 34g and 34h of the second end portion 34b of the voice coil 34, to reduce a mass effect on the overall HSA 40 in the BFM of the HSA 40.

As illustrated in FIG. 4, the voice coil 34 of the present exemplary embodiment has a trapezoidal shape in which the width of the first end portion 34a adjacent to the pivot shaft holder 44 is narrower than that of the opposite portion 34b. Also, the bobbin body 451 is coupled to the inner side of the first end portion 34a and both corner portions 34e and 34f of the first end portion 34a of the voice coil 34 adjacent to the pivot shaft holder 44 and extends toward the bobbin legs 452. The pair of bobbin legs 452 respectively extend from the end portion 36 of the bobbin body 451 to both corner portions 34g and 34h of the second end portion 34b of the voice coil 34, forming an angle "α", which may be an obtuse angle, so that the bobbin 45 according to the present exemplary embodiment has a plane " 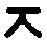 " shape as described above.

Also, as illustrated in FIG. 5, the height H1 of the bobbin body 451 may be provided to be about 4/5 to 5/6 of the overall height H2 of the bobbin 45 from the first end portion 34a to the second end portion 34b. Accordingly, the height H3 of a center portion of a removal area E1 between the bobbin legs 452 is provided to be about 1/5 to 1/6 of the overall height H2 of the bobbin 45.

Using a metal material including aluminum or an aluminum alloy in the bobbin 45 according to the present exemplary embodiment, the BFM frequency f of the HSA40 can be increased by about 190 Hz compared to a plastic bobbin known to the prior art. Accordingly, with an increased BFM frequency, the TMR can be reduced, and reliability of the HDD 1 according to the present exemplary embodiment can be improved.

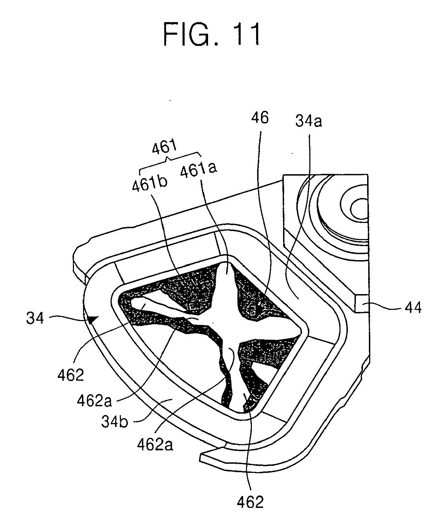

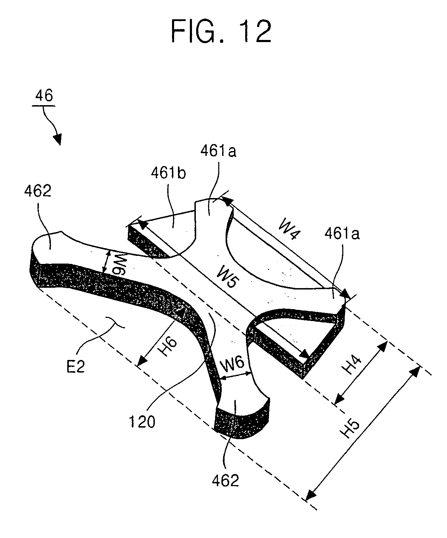

An HDD according to another exemplary embodiment of the invention will be described below with reference to FIGS. 11 and 12. However, for convenience of explanation, the descriptions on the elements the same as those in the above-described exemplary embodiment may be omitted herein.

FIG. 11 illustrates a bobbin 46 of an HDD according to such other exemplary embodiment of the invention. FIG. 12 is a perspective view illustrating the shape of the bobbin of FIG. 11 that is changed for convenience of manufacturing. Referring to FIGS. 11 and 12, the bobbin 46 according to the present exemplary embodiment includes a bobbin body 461 coupled to the first end portion 34a of the voice coil 34 adjacent to the pivot shaft holder 44, and a pair of bobbin legs 462 extending from an end portion 110 of the bobbin body 461 toward areas of the second end portion 34b of the voice coil 34 that are separated from each other, and coupled to the bobbin body 461.

The bobbin body 461 is coupled to the first end portion 34a of the voice coil 34 adjacent to the pivot shaft holder 44 to improve the stiffness effect on the overall HSA 40 in the BFM of the HSA 40. The bobbin body 461 includes a pair of first body units 461 a and a second body unit 461b having an upper surface at a position lower than the upper surface of the first body units 461a. Since the lower surfaces of the first body units 461 a and the second body unit 461 b may exist on the same plane, the thicknesses of the first body units 461 a and the second body unit 461 b may be different from each other.

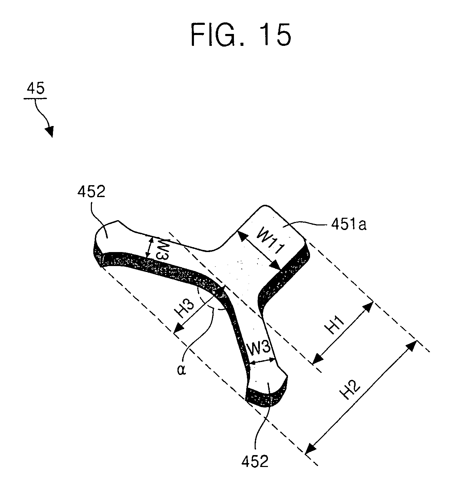

A purpose for the different thicknesses between the first body units 461a and the second body unit 461 b may be to minimize the reduction of the BFM and reduce the mass and moment of inertia as one of plans to reduce the weight of the HSA 40. That is, the pair of first body units 461 a may be respectively extended from the end portions 462a of the pair of bobbin legs 462 to substantially form an "X" shape with the pair of bobbin legs 462. The second body unit 461 b may have a lower thickness than each of the first body units 461 a. Also, a width W4 of a portion adjacent to the pivot shaft holder 44 may be smaller than a width W5 of the opposite portion thereof towards the end portion 120 of the bobbin body 461. Also, as illustrated below with regard to FIG. 15, the first body units 461a may alternatively be formed into a single first body unit 451 a to allow the combination of the two bobbin legs 462 and single first body unit 451 a to a "Y" shape positioned above the second body unit 461 b.

The pair of bobbin legs 462, each having a width W6, respectively extend from the end portion 120 of the bobbin body 461 to areas of the second end portion 34b of the voice coil 34 that are separated from each other, to reduce a mass effect on the overall HSA 40 in the BFM of the HSA 40. Accordingly, the bobbin 46 according to the present exemplary embodiment may have a plane " 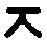 " shape as a whole when combining the first and second body units 461 a and 461 b to form the straight portion of the plane " 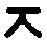 " shape with two arc-shaped leg portions 462.

Also, the height H4 of each of the bobbin bodies 461 a and 461 b may be provided to be about 4/5 to 5/6 of the overall height H5 of the bobbin 46. Accordingly, the height H6 of a center portion of a removal area E2 between the bobbin legs 462 is provided to be about 1/5 to 1/6 of the overall height H5 of the bobbin 46, as illustrated in FIG. 12.

In the bobbin 46 formed of a metal material including aluminum or aluminum allowy described herein and according to the present exemplary embodiment, the BFM frequency f of the HSA 40 can be increased by about 160 Hz compared to plastic bobbins. Also, the moment of inertia can be reduced to about 0.49 kgmm², compared to 0.51 kgmm² of the plastic bobbins. Accordingly, the TMR can be reduced, and reliability of the HDD 1 according to the present exemplary embodiment can be improved. A reduced moment of inertia allows the bobbin 46 to better overcome forces such as starting friction and other forces that may impede the movement of the HSA 40.

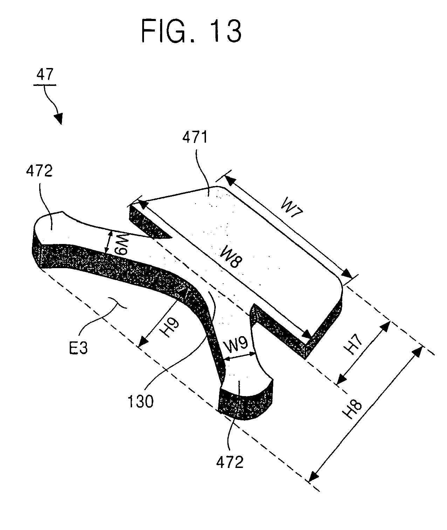

An HDD according to another exemplary embodiment of the invention will be described below with reference to FIG. 13 which shows a bobbin 47 of an HDD according to such other exemplary embodiment. However, for convenience of explanation, the descriptions on the elements same as those in the above first-described exemplary embodiment may be omitted herein.

Referring to FIG. 13, the bobbin 47 according to this exemplary embodiment includes a bobbin body 471 coupled to an end portion of a voice coil (not illustrated) adjacent to a pivot shaft holder (not illustrated), and a pair of bobbin legs 472 extending from an end portion 130 of the bobbin body 471 toward areas of the other end portion of the voice coil that are separated from each other, and coupled thereto.

The bobbin body 471 may be provided such that a width W7 of a portion adjacent to the pivot shaft holder (not illustrated) may be smaller than a width W8 of a portion that is not adjacent to the pivot shaft holder (not illustrated), as in the above second-described exemplary embodiment. The pair of bobbin legs 472, each having a width W9, respectively extend from the end portion 130 of the bobbin body 471 to areas of the second end portion of the voice coil (not illustrated) that are separated from each other, and coupled thereto. Accordingly, the bobbin 47 according to the present exemplary embodiment has a plane " 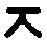 " shape as a whole, as described above.

Also, the height H7 of the bobbin body 471 is provided to be about 4/5 to 5/6 of the overall height H8 of the bobbin 47. Accordingly, the height H9 of a center portion of a removal area E3 between the pair of bobbin legs 472 is provided to be about 1/5 to 1/6 of the overall height H8 of the bobbin 47, as illustrated in FIG. 13.

In the metal including aluminum and aluminum alloys materials bobbin 47 according to the present exemplary embodiment, the BFM frequency f of the HSA40 can be increased and the moment of inertia can be reduced, compared to the plastic bobbins. Accordingly, TMR can be reduced and reliability of the HDD 1 according to the present exemplary embodiment can be improved.

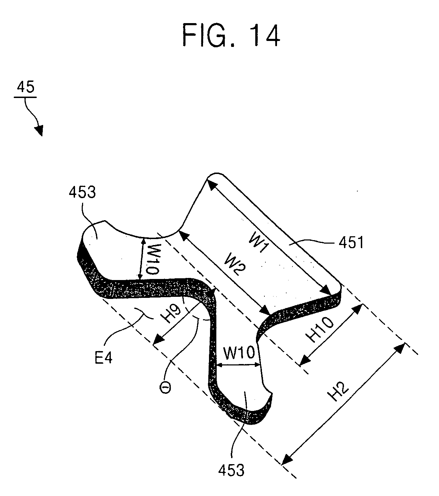

FIGS. 14 and 15 illustrate alternate shapes of a bobbin according to exemplary embodiments of the invention. As illustrated in FIG. 14, a height H10 of the bobbin body 451 is provided to be about 1/2 to 3/4 of the overall height H2 of the bobbin 45 from the first end portion of the voice coil to the second end portion of the voice coil (not illustrated). Accordingly, the height H9 of a center portion of a removal area E4 between the bobbin legs 453 may be provided to be about 1/2 to 1/4 of the overall height H2 of the bobbin 45. Also, the bobbin legs 453 in this exemplary embodiment may have a wider width which may allow the angle "θ" between the bobbin legs 453 to be a right angle or an acute angle, as illustrated in FIG. 14, and having a similar " 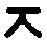 " shape as described previously.

As illustrated in FIG. 15, the bobbin body 451 a may alternatively be formed of a single portion having a width W11 smaller than widths W1 and W2, but larger than the width W3 of the bobbin legs. The narrower width bobbin body 451 a allows the bobbin 45 to form a "Y" shape that includes the bobbin body 451 a and the bobbin legs 452. This configuration of the bobbin 45 allows the bobbin to have a reduced mass and moment of inertia than prior art bobbins and allows the frequency of the resonant mode such as a butterfly mode of a HSA to be increased, TSM to be reduced, and overall reliability improved.

Although, in the above-described exemplary embodiments, the bobbin is manufactured of an aluminum material, the bobbin may be manufactured of other metal material and metal alloys.

As described above, in the hard disk drive according to the invention, a servo bandwidth is increased by increasing the butterfly mode (BFM) frequency of the HSA, so that track mis-registration (TMR) may be reduced.

Although a few embodiments of the present general inventive concept have been illustrated and described, it would be appreciated by those skilled in the art that changes may be made in these embodiments without departing from the principles of the inventive concept, the scope of which is defined in the claims and their equivalents.

## Claims

1. A hard disk drive comprising:
an actuator arm (43) to pivot over a disk (11) around a pivot shaft (42, 48) as a center of rotation to allow a read/write head (41) disposed on one side of the pivot shaft to access data on the disk,
a bobbin (45) provided at an opposite side of the read/write head with respect to a pivot shaft holder (44) that rotatably supports the pivot shaft, said bobbin comprising a bobbin body (451) coupled to a first end portion (34a) of a voice coil adjacent to the pivot shaft holder, and the voice coil (34) coupled to the bobbin,
**characterized in that** the bobbin comprises a plurality of bobbin legs (452) extending from an end portion (36) of the bobbin body toward areas (34g, 34h) of a second end portion (34b) of the voice coil on an opposite side of the first end portion of the voice coil, and coupled to the areas of the second end portion of the voice coil.

2. The hard disk drive of claim 1, wherein the plurality of bobbin legs are a pair of bobbin legs, and the bobbin substantially has a plane " 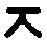 " shape.

3. The hard disk drive of claim 2, wherein the voice coil substantially has a trapezoidal shape, and the pair of bobbin legs are extended from the end portion of the bobbin body toward both corners of the second end portion of the voice coil, forming an obtuse angle (α), and coupled to both corners of the second end portion of the voice coil.

4. The hard disk drive of any of claims 1 to 3, wherein the bobbin body has a height (H1) to correspond to 4/5 to 5/6 of an overall height (H2) of the bobbin.

5. The hard disk drive of any of claims 2 to 4, wherein the bobbin body (461) comprises:
a pair of first body units (461 a), each having an upper surface provided on the substantially same plane with an upper surface of each of the pair of bobbin legs; and
a second body unit (461b) having an upper surface at a position lower than an upper surface of each of the pair of first body units.

6. The hard disk drive of claim 5, wherein the pair of first body units respectively extend from a base portion of each of the pair of bobbin legs, to substantially form an "X" shape with the pair of bobbin legs, and the second body unit substantially has a trapezoidal shape.

7. The hard disk drive of claim 5 or 6, wherein the thicknesses of the first body units and the second body unit are different from each other, and a width (W4) of a portion of the second body unit adjacent to the pivot shaft holder is smaller than a width (W5) of an opposite portion of the second body unit.

8. The hard disk drive of any of claims 1 to 7, wherein a width (W1) of a portion of the bobbin body adjacent to the pivot shaft holder is larger than a width (W2) of an opposite portion of the bobbin body, and the plurality of bobbin legs are a pair of bobbin legs extending from both corner portions of the end portion of the bobbin body and respectively coupled to the areas of the second end portion of the voice coil that are separated from each other, or wherein a width (W7) of a portion of the bobbin body adjacent to the pivot shaft holder is smaller than a width (W8) of an opposite portion of the bobbin body, and the plurality of bobbin legs are a pair of bobbin legs extending from a center portion of the end portion of the bobbin body and respectively coupled to the areas of the second end portion of the voice coil that are separated from each other.

9. The hard disk drive of claim 1, wherein the plurality of legs have substantially a same width (W3) and/or wherein the bobbin body portion has a first width and the plurality of legs are separated from each other by a second width larger than the first width.

10. The hard disk drive of claim 1, wherein the two legs extend from the body portion to form an acute angle (6) with each other and/or wherein the bobbin body and the two legs substantially form a "Y" shape.

11. The hard disk drive of any of claims 10, wherein the bobbin is formed of a metal material or wherein the bobbin is formed of aluminum or an aluminum alloy.

## Patentansprüche

1. Festplattenlaufwerk mit
- einem Aktuatorarm (43) zum Verschwenken über einer Festplatte (11) um eine Schwenkachse (42, 48) als Drehpunkt, so dass einem auf einer Seite der Schwenkachse angeordneten Schreib-/Lesekopf (41) ein Zugreifen auf Daten auf der Festplatte ermöglicht wird,
- einem Spulenträger (45), der an einer bezüglich eines Schwenkachsenhalters (44), welcher die Schwenkachse drehbar hält, gegenüberliegenden Seite des Schreib-/Lesekopfes angeordnet ist, wobei der Spulenträger einen Trägerkörper (451) aufweist, der mit einem ersten Endbereich (34a) einer Schwingspule benachbart zum Schwenkachsenhalter gekoppelt ist, und die Schwingspule (34) mit dem Spulenträger gekoppelt ist,
- **dadurch gekennzeichnet, dass** der Spulenträger eine Mehrzahl von Trägerbeinen (452) aufweist, die sich von einem Endbereich (36) des Trägerkörpers zu Zonen (34g, 34h) eines zweiten Endbereichs (34b) der Schwingspule an einer gegenüberliegenden Seite des ersten Endbereichs der Schwingspule erstrecken und mit den Zonen des zweiten Endbereichs der Schwingspule gekoppelt sind.

2. Festplattenlaufwerk nach Anspruch 1, wobei die Mehrzahl von Trägerbeinen ein Paar von Trägerbeinen sind und der Spulenträger im Wesentlichen eine plane " 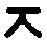 "-Form aufweist.

3. Festplattenlaufwerk nach Anspruch 2, wobei die Schwingspule eine im Wesentlichen trapezförmige Gestalt aufweist und sich das Paar von Trägerbeinen vom Endbereich des Trägerkörpers aus in Richtung beider Ecken des zweiten Endbereichs der Schwingspule unter Bildung eines stumpfen Winkels (α) erstreckt und mit beiden Ecken des zweiten Endbereichs der Schwingspule gekoppelt ist.

4. Festplattenlaufwerk nach einem der Ansprüche 1 bis 3, wobei der Trägerkörper eine Höhe (H1) aufweist, die 4/5 bis 5/6 einer Gesamthöhe (H2) des Spulenträgers entspricht.

5. Festplattenlaufwerk nach einem der Ansprüche 2 bis 4, wobei der Trägerkörper (461) umfasst:
- ein Paar erster Trägerkörpereinheiten (461a), von denen jede eine Oberseite aufweist, die sich auf im Wesentlichen der gleichen Ebene wie eine Oberseite jedes von dem Paar von Trägerbeinen befindet, und
- eine zweite Trägerkörpereinheit (461b) mit einer Oberseite, die sich in einer Position unterhalb einer Oberseite jedes von dem Paar erster Trägerkörpereinheiten befindet.

6. Festplattenlaufwerk nach Anspruch 5, wobei sich das Paar erster Trägerkörpereinheiten jeweils von einem Basisbereich eines von dem Paar von Trägerbeinen erstreckt, um mit dem Paar von Trägerbeinen im Wesentlichen eine "X"-Form zu bilden, und die zweite Trägerkörpereinheit eine im Wesentlichen trapezförmige Gestalt aufweist.

7. Festplattenlaufwerk nach Anspruch 5 oder 6, wobei die Dicken der ersten Trägerkörpereinheiten und der zweiten Trägerkörpereinheit voneinander verschieden sind und eine Breite (W4) eines Teils der zweiten Trägerkörpereinheit benachbart zum Schwenkachsenhalter kleiner ist als eine Breite (W5) eines gegenüberliegenden Teils der zweiten Trägerkörpereinheit.

8. Festplattenlaufwerk nach einem der Ansprüche 1 bis 7, wobei eine Breite (W1) eines Teils des Trägerkörpers benachbart zum Schwenkachsenhalter größer ist als eine Breite (W2) eines gegenüberliegenden Teils des Trägerkörpers und die Mehrzahl von Trägerbeinen ein Paar von Trägerbeinen ist, die sich von beiden Eckbereichen des Endbereichs des Trägerkörpers erstrecken und mit je einem der voneinander separierten Zonen des zweiten Endbereichs der Schwingspule gekoppelt sind, oder wobei eine Breite (W7) eines Teils des Trägerkörpers benachbart zum Schwenkachsenhalter kleiner ist als eine Breite (W8) eines gegenüberliegenden Teils des Trägerkörpers und die Mehrzahl von Spulenträgerbeinen ein Paar von Spulenträgerbeinen ist, die sich von einem zentralen Teil des Endbereichs des Trägerkörpers erstrecken und mit je einer der voneinander separierten Zonen des zweiten Endbereichs der Schwingspule gekoppelt sind.

9. Festplattenlaufwerk nach Anspruch 1, wobei die Mehrzahl von Beinen im Wesentlichen eine gleiche Breite (W3) aufweist und/oder wobei der Trägerkörperteil eine erste Breite aufweist und die mehreren Beine voneinander um eine zweite Breite, die größer als die erste Breite ist, separiert sind.

10. Festplattenlaufwerk nach Anspruch 1, wobei sich die zwei Beine vom Trägerteil unter Bildung eines spitzen Winkels (θ) erstrecken und/oder wobei der Trägerkörper und die beiden Beine im Wesentlichen eine "Y"-Form bilden.

11. Festplattenlaufwerk nach einem der Ansprüche 1 bis 10, wobei der Spulenträger aus einem Metallmaterial gebildet ist oder wobei der Spulenträger aus Aluminium oder einer Aluminiumlegierung gebildet ist.

## Revendications

1. Lecteur de disque dur comprenant :
un bras actionneur (43) pour pivoter au-dessus d'un disque (11) autour d'un axe de pivot (42,48) comme un centre de rotation afin de permettre à une tête de lecture/écriture (41) disposée sur un côté de l'axe de pivot d'accéder aux données sur le disque,
une carcasse de bobine (bobbin) (45) prévue au niveau d'un côté opposé de la tête de lecture/écriture par rapport à un support d'axe de pivot (44) qui supporte rotativement l'axe de pivot, ladite carcasse de bobine comprenant un corps de carcasse de bobine (bobbin body) (451) couplée à une première portion d'extrémité (34a) et une bobine mobile adjacente au support d'axe de pivot, et la bobine mobile (34) couplée à la carcasse de bobine,
**caractérisé en ce que** la carcasse de bobine comprend une pluralité de pieds de carcasse de bobine (452) s'étendant à partir d'une portion d'extrémité (36) du corps de la carcasse de bobine vers des zones (34g,34h) d'une seconde portion d'extrémité (34b) de la bobine mobile sur un côté opposé de la première portion d'extrémité de la bobine mobile, et couplés aux zones de la seconde portion d'extrémité de la bobine mobile.

2. Lecteur de disque dur selon la revendication 1, dans lequel la pluralité de pieds de la carcasse de bobine sont une paire de pieds de la carcasse de bobine, et la carcasse de bobine a substantiellement une forme plane " 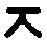 ".

3. Lecteur de disque dur selon la revendication 2, dans lequel la bobine mobile a substantiellement une forme trapézoïdale, et la paire de pieds de la carcasse de bobine sont étendus à partir de la portion d'extrémité du corps de la carcasse de bobine vers les deux coins de la seconde portion d'extrémité de la bobine mobile, formant un angle obtus (α) et couplés aux deux coins de la seconde portion d'extrémité de la bobine mobile.

4. Lecteur de disque dure selon l'une quelconque des revendications 1 à 3, dans lequel le corps de la carcasse de bobine a une hauteur (H1) correspondant à 4/5 à 5/6 d'une hauteur totale (H2) de la carcasse bobine.

5. Lecteur de disque dur selon l'une quelconque des revendications 2 à 4, dans lequel le corps de la carcasse de bobine (461) comprend :
une paire de premières unités de corps (461 a), ayant chacune une surface supérieure prévue sur substantiellement le même plan avec une surface supérieure de chacune de la paire de pieds de la carcasse de bobine ; et
une seconde unité de corps (416b) ayant une surface supérieure à une position inférieure à une surface supérieure de chacune de la paire de premières unités de corps.

6. Lecteur de disque dure selon la revendication 5, dans lequel la paire de premières unités de corps s'étendent respectivement à partir d'une portion de base de chacune de la paire de pieds de la carcasse de bobine, pour substantiellement former une forme de « X » avec la paire de pieds de la carcasse de bobine, et la seconde unité de corps a une forme substantiellement trapézoïdale.

7. Lecteur de disque dur selon la revendication 5 ou 6, dans lequel les épaisseurs des premières unités de corps et de la seconde unité de corps sont différentes l'une de l'autre, et une largeur (W4) d'une portion de la seconde unité de corps adjacente au support d'axe de pivot est plus petite qu'une largeur (W5) d'une portion opposée de la seconde unité de corps.

8. Lecteur de disque dur selon l'une quelconque des revendications 1 à 7, dans lequel une largeur (W1) d'une portion du corps de la carcasse bobine adjacent au support d'axe de pivot est plus grande qu'une largeur (W2) d'une portion opposée du corps de la carcasse de bobine, et la pluralité de pieds de la carcasse de bobine sont une paire de pieds de la carcasse de bobine s'étendant à partir des deux portions de coin de la portion d'extrémité du corps de la carcasse de bobine et couplés respectivement aux zones de la seconde portion d'extrémité de la bobine mobile qui sont séparées l'une de l'autre, ou dans lequel une largeur (W7) d'une portion du corps de la carcasse de bobine adjacente au support d'axe de pivot est plus petite qu'une largeur (W8) d'une portion opposée du corps de la carcasse de bobine, et la pluralité de pieds de la carcasse de bobine sont une paire de pieds de la carcasse de bobine s'étendant à partir d'une portion centrale de la portion d'extrémité du corps de la carcasse de bobine et respectivement couplés aux zones de la seconde portion d'extrémité de la bobine mobile qui sont séparées l'une de l'autre.

9. Lecteur de disque dur selon la revendication 1, dans lequel la pluralité de pieds ont substantiellement une même largeur (W3) et/ou dans lequel la portion de corps de la carcasse de bobine a une première largeur et la pluralité de pieds sont séparés l'un de l'autre par une seconde largeur plus grande que la première largeur.

10. Lecteur de disque dur selon la revendication 1, dans lequel les deux pieds s'étendent à partir de la portion de corps pour former un angle aigu (8) l'un avec l'autre et/ou dans lequel le corps de la carcasse de bobine et les deux pieds forment substantiellement une forme de « Y ».

11. Lecteur de disque dur selon la revendication 10, dans lequel la carcasse de bobine est formée d'un matériau métallique ou dans lequel la carcasse de bobine est formée d'aluminium ou d'un alliage d'aluminium.
